# EUROPÄISCHE PATENTSCHRIFT

(11) **EP 1 182 114 B1**
(45) Veröffentlichungstag und Bekanntmachung des Hinweises auf die Patenterteilung: **17.01.2007**
(21) Anmeldenummer: 01119502.1
(22) Anmeldetag: 14.08.2001
(51) Int. Cl.: B62D 1/184, B62D 1/18

(54) **Positionseinstellvorrichtung für eine Lenksäule**
Position adjustment device for a steering column
Dispositif d'ajustement de position pour une colonne de direction

(30) Priorität: 16.08.2000 DE 10039794
(43) Veröffentlichungstag der Anmeldung: 27.02.2002
(73) Patentinhaber: DaimlerChrysler AG, 70567 Stuttgart (DE)
(72) Erfinder: Bohlen, Jens, 21398 Reppenstedt (DE); Born, Christian, 22605 Hamburg (DE); Schuliers, Wolfgang, 21244 Buchholz (DE)

(56) Entgegenhaltungen:
- DE-A- 19 805 289
- GB-A- 2 295 445
- US-A- 5 988 679

## Beschreibung

Die vorliegende Erfindung bezieht sich auf eine Positionseinstellvorrichtung für eine Lenksäule, insbesondere eines Kraftfahrzeuges, gemäß den Merkmalen des Oberbegriffs des Patentanspruches 1, wie sie z.B. aus der US-A-5,988,679 bekannt ist.

Eine Kraftfahrzeuglenksäule umfaßt üblicherweise einen Säulenmantel, eine Lenkwelle, die drehbar an dem Säulenmantel getragen ist, und ein an der Lenkwelle angebrachtes Lenkrad. Wenn der Säulenmantel nach oben und nach unten schwenkbar ist, um die vertikale Position des Lenkrades zu verstellen, wird die Lenksäule als in der Neigung verstellbar bezeichnet. Kann dagegen die Länge des Säulenmantels verändert werden, um dadurch die horizontale Position des Lenkrades zu verstellen, wird die Lenksäule als teleskopartig verstellbar bezeichnet.

Es sind aus der Praxis Positionseinstellvorrichtungen für neigbare und/oder teleskopische Lenksäulen bekannt, bei denen ein paar vertikale Seiten eines stationären Trägers durch eine hebebetätigte Schraube oder durch einen hebebetätigten Drehnocken an den Säulenmantel geklemmt werden, um durch Reibung die Position des Säulenmantels relativ zur Fahrzeugkarosserie festzuhalten.

Auch aus der deutschen Offenlegungsschrift DE 198 05 289 ist eine neigbare und teleskopartige Kraftfahrzeuglenksäule mit einem aus einem unteren und einem oberen jeweils rohförmigen Säulenmantel bestehenden Säulenmantel bekannt, wobei der untere Säulenmantel den oberen teleskopartig überlappt. Der Säulenmantel ist vertikal an der Karosserie schwenkbar, um die vertikale Position des Lenkrades zu verstellen. Ebenso kann der ober Säulenmantel relativ zum unteren horizontal verstellt werden. Eine Positionseinstellvorrichtung zwischen dem oberen Säulenmantel und der Karosserie hält die horizontalen und vertikalen Positionen des oberen Säulenmantels und deshalb die horizontalen und vertikalen Positionen des Lenkrades fest. Eine Einstellwelle der Positionseinstellvorrichtung erstreckt sich durch vertikale und horizontale Schlitze oberhalb bzw. unterhalb des Säulenmantels wodurch eine in der Neigung und teleskopartig verstellbare Lenksäule bereitgestellt wird. Befindet sich nun der Einstellhebel dieser Einstellvorrichtung in seiner entriegelten Position, so kann der Säulenmantel frei vertikal und horizontal verstellt werden.

Bei einer solchen Anordnung einer Positionseinstellvorrichtung hat es sich als nachteilig erwiesen, daß die Einstellwelle immer oberhalb bzw. unterhalb des Säulenmantels angeordnet werden muß und daher viel zusätzlichen Bauraum in der Höhe erfordert.

Eine weitere, aus der EP 0 493 181 B1 bekannte Lageverriegelung für eine verstellbare Kraftfahrzeuglenksäule weist denselben Nachteil auf, wobei zur Lageverriegelung wieder ein über dem Mantelrohr geführter Bolzen vorgesehen ist, der viel zusätzlichen Bauraum erfordert.

Eine Klemmvorrichtung für eine verstellbare Säule, die insbesondere in der Höhe einen reduzierten Bauraum erfordert, wird in der deutschen Patentschrift DE 195 07 900 vorgeschlagen. Darin wird eine Klemmvorrichtung beschrieben, bei der ein in Richtung seiner Längsachse verstellbares Rohrgehäuse zwischen zwei in der Karosserie festen Haltern durch einen Klemmmechanismus mit einem die beiden Halter quer zur Längsachse des Rohrgehäuses durchdringenden axial verspannbaren Klemmbolzen festklemmbar ist. Das Rohrgehäuse nimmt eine Lenkwelle auf, wobei der Klemmbolzen die in dem Rohrgehäuse angeordnete Lenkwelle ringförmig umschließt und mit seiner Längsachse im Bereich des Rohrgehäusequerschnitts angeordnet ist.

Bei einer solchen Klemmvorrichtung hat es sich jedoch als nachteilig erwiesen, daß die Klemmung direkt auf das Mantelrohr wirkt, was bezüglich der Ausgestaltung des Mantelrohrs sehr hohe Anforderungen stellt, damit dieses im Bereich dieser Klemmung nicht beeinträchtigt wird.

Eine einstellbare Fahrzeuglenksäulenverklemmung, die dieses Problem löst, ist beispielsweise aus der WO 97/10136 bekannt. Hierbei wird ein einstellbarer Fahrzeuglenksäulenverklemmmechanismus zum Einstellen einer Lenksäule beschrieben, der einen Lenksäulenauflagerbock mit zwei Flanken aufweist, die sich über jede Seite der äußeren Lenksäule erstrecken, wobei jede Flanke einen Schlitz enthält, um eine Höheneinstellung zu ermöglichen. Eine solche Anordnung benötigt in der Höhe einen relativ geringen Bauraum, da die Bolzen seitlich des Mantelrohres weggeführt werden und nicht oberhalb oder unterhalb des Mantelrohres verlaufen.

Das Lösen und Feststellen der Verklemmung erfolgt bei diesem Verklemmmechanismus über einen Hebel, der mit beiden, seitlich des Mantelrohres weggeführten Bolzen in Verbindung steht. Jeder der Bolzen wird hierbei mit einem linksdrehenden und einem rechtsdrehenden Gewinde versehen, so daß die Gewinde mehrgängig ausgebildet sind. Auf diesen Gewinden sind Teile des Klemmmechanismusbetätigungshebels aufgebracht, die sich derart erstrecken, daß sie beide Flanken auf beiden Seiten des äußeren Mantels umklammern. Die seitlichen Teile des Betätigungshebels sind in Gewindeverbindung auf dem Bolzen zum Verklemmen befestigt, wobei jeder seitliche Teil des Bedienhebels einen Innenkonus, der mit einer auf den Bolzen geschraubten Knebelmutter in Verbindung steht, umfaßt. Bei einem Drehen des Betätigungshebels drehen sich die Knebelmuttern auf den Bolzen in entgegengesetzten Richtungen auf den Gewinden. Es können so die seitlichen Teile des Bedienhebels zueinander bewegt werden, um derart die Knebelmuttern dazu zu bewegen, die beiden Träger zusammen zu klemmen und dadurch eine Lenksäulenbefestigung zu bewegen. In einer entgegengesetzten Rotationsrichtung des Betätigungshebels werden die beiden seitlichen Teile in ihre entgegengesetzte Richtung bewegt, um die beiden Träger zu lösen und dadurch eine Einstellung der Lenkeinrichtung zu erlauben.

Bei einer derartigen Anordnung hat es sich jedoch als nachteilig erwiesen, daß der Betätigungshebel beim Feststellen und Lösen der Verbindung ein relativ starkes Dehnen und Zusammenpressen der seitlichen Flanken zur Folge hat, was zu Ermüdungen im Material führen kann. Darüber hinaus erfordert die Bereitstellung der Bolzen mit einem mehrgängigen Gewinde einen relativ hohen baulichen Aufwand und ist damit auch sehr kostenintensiv .

Es ist daher Aufgabe der vorliegenden Erfindung, eine Positionseinstellvorrichtung für eine Lenksäule bereitzustellen, bei der mittels relativ einfacher Mittel ein Feststellen und Lösen der Längen- und Höhenverstellung einer Lenksäule ermöglicht wird.

Diese Aufgabe wird bei einer Positionseinstellvorrichtung für eine Lenksäule der eingangs genannten Art mit den Merkmalen des kennzeichnenden Teils des Patentanspruches 1 gelöst.

Mit einer solchen erfindungsgemäßen Positionseinstellvorrichtung für eine Lenksäule ist es möglich, in einem sehr flachen Bauraum eine einfache und beständige Klemmung bereitzustellen, wobei es sich insbesondere als vorteilhaft erwiesen hat, daß durch die Verwendung einer mittels des Bedienhebels betätigbaren Kurvenscheibe ein definierter Hub für die Verstellung der Lenksäule vorgesehen ist.

Es wird dadurch eine definierte Positionierung des Betätigungs- bzw. Bedienhebels geschaffen, bei der in der einen Position ein Verstellen möglich ist, wohingegen in der anderen vorgegebenen Position eine Verklemmung erfolgt.

Als "Kurvenscheibe" wird dabei jeweils eine Scheibe mit einem Profil verstanden, das in einer ersten Stellung der Scheibe ein Spiel zwischen angrenzenden Bauelementen läßt und in einer zweiten Stellung z.B. durch eine Erhebung eine Klemmwirkung erzeugt.

Als besonders vorteilhaft hat es sich gezeigt, wenn sowohl für die Längs- als auch für die Höhenverstellung jeweils gesonderte Kurvenscheiben vorgesehen sind und der Bedienhebel eine mittig zu diesen Kurvenscheiben gelagerte und mit diesen zusammenwirkende weitere Kurvenscheibe betätigt. Mit einer solchen Anordnung kann erreicht werden, daß durch eine unterschiedliche Positionierung des Betätigungshebels ein getrennter Hub für die zwei Kurvenscheiben bereitgestellt werden kann und daher eine Höhen- und eine Längenverstellung gesondert erfolgen kann.

Der Bedienhebel selbst kann dabei, egal bei welcher Anordnung, immer an den Kurvenscheibenlaufflächen definiert geführt werden.

Zur besseren Führung des Klemmbolzens kann es vorgesehen sein, daß auf dem Klemmbolzen eine Hülse angeordnet ist, die zumindest zwischen einer Schiene und einem dazu benachbarten Halter eine mit der Hülse fest verbundene Scheibe aufweist. Dies ist insbesondere von Vorteil, wenn gemäß der vorliegenden Erfindung der Bedienhebel zum Bedienen der Positionseinstellvorrichtung nur bei der Höhenverstellbewegung, nicht aber bei der Längenverstellung mitbewegt wird und die verschiedenen Verklemmelemente in üblicher Weise lose auf dem Klemmbolzen hintereinander angeordnet sind. Mit der Hülse kann zuverlässig verhindert werden, daß bei einer Verstellung die Reibung zwischen den Klemmbolzen und den Schienen zu einem Verkippen der Klemmbolzen führt. Bei Höhenverstellbewegungen kann die Scheibe mit dem Klemmbolzen zusammen am Halter entlang gleiten, aber nicht kippen. So wird der Bedienhebel sauber geführt und der Gefahr von Funktionsstörungen wirkungsvoll entgegnet.

Wenn die Positionseinstelleinrichtung besonders crashfest sein soll, aber dennoch möglichst wenig Bauraum erfordern soll, kann auf zumindest einer Seite des Mantelrohres das Feststellen der Klemmbolzen durch eine formschlüssige Klemmung, beispielsweise durch eine Verzahnung, erfolgen, während auf der anderen Seite die Klemmung reibschlüssig erfolgt.

Durch die formschlüssige Klemmung wird bei einer solchen Ausgestaltung die Crashfestigkeit erreicht, während durch die reibschlüssige Klemmung eine Ersparnis an Bauraum erreicht werden kann.

Weitere Vorteile und Weiterbildungen der Erfindung ergeben sich aus den Patentansprüchen, der Zeichnung und der nachfolgenden Beschreibung, in der unter Bezugnahme auf die Zeichnung Ausführungsbeispiele der Erfindung im einzelnen beschrieben sind.

In der Zeichnung zeigt:
- Fig. 1: einen schematischen Schnitt durch eine Lenksäule mit einer Positionseinstellvorrichtung gemäß einer ersten bevorzugten Ausführungsform der Erfindung;
- Fig. 2: eine perspektivische Ansicht eines Ausschnitts eines Mantelrohres mit einer Positionseinstellvorrichtung gemäß einer zweiten bevorzugten Ausführungsform der Erfindung;
- Fig. 3: eine Seitenansicht der Positionseinstellvorrichtung von Fig. 2;
- Fig. 4: einen Schnitt entlang der Linie A-A in Fig. 3; und
- Fig. 5: eine Explosionsdarstellung der auf den Klemmbolzen angeordneten Teile gemäß der in den Fig. 2 bzw. Fig. 4 gezeigten zweiten bevorzugten Ausführungsform.

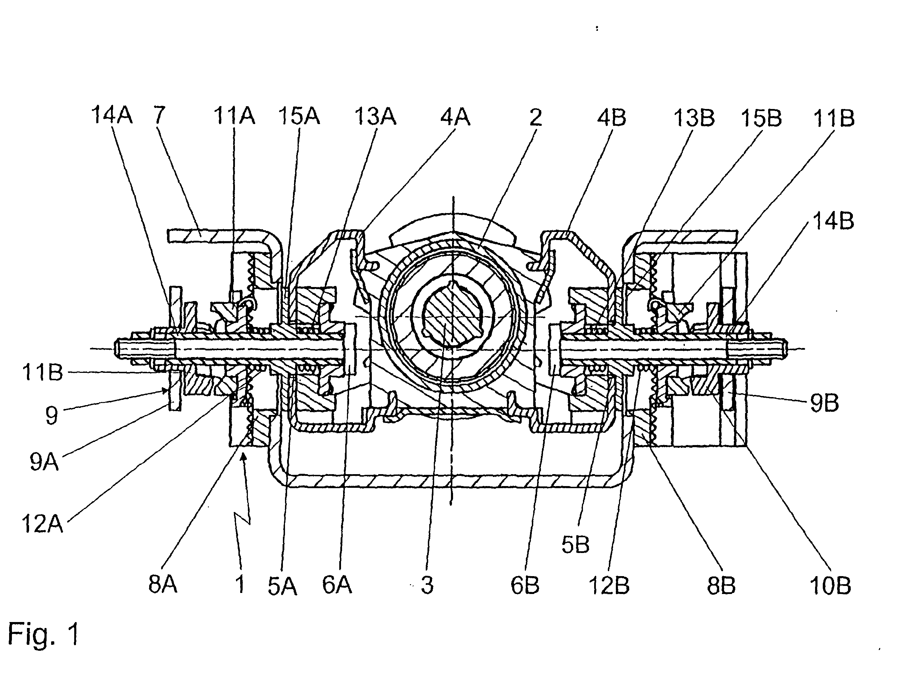

In der Fig. 1 ist nun ein Schnitt durch eine Lenksäule auf Höhe einer Positionseinstellvorrichtung 1 dargestellt. Wie üblich ist die Lenksäule derart gestaltet, daß sie im wesentlichen aus einer in einem Mantelrohr 2 gelagerten Lenkwelle 3 gebildet wird.

Wie aus der Fig. 1 zu entnehmen ist, muß es sich bei dem Mantelrohr 2 nicht um ein vollständig rohrförmiges Bauteil handeln, sondern insbesondere die Außenkontur kann nach Anordnung und Art der Befestigung im Fahrzeug unterschiedliche Formen aufweisen.

Das Mantelrohr 2 ist an zwei im wesentlichen einander gegenüber liegend angeordneten Schienen 4A und 4B fixiert. Diese Schienen 4A, 4B erstrecken sich im wesentlichen in axialer Richtung des Mantelrohres 2 und sind ihrerseits wiederum für den Längsverstellweg der Lenksäule geführt. Hierfür sind in den Schienen 4A, 4B jeweils sich in axialer Richtung erstreckende Schlitze 5A, 5B vorgesehen.

Darüber hinaus sind in den Schlitzen 5A, 5B der Schienen 4A, 4B jeweils Klemmbolzen 6A, 6B geführt, die sich im wesentlichen in einer radialen Richtung weg vom Mantelrohr 2 erstrecken. Weiterhin durchlaufen die Klemmbolzen 6A, 6B einen Halter 7, der zum Befestigen an einem fahrzeugfesten Bauteil dient.

Wie der Fig. 1 zu entnehmen ist, durchläuft dabei jeder der beiden Klemmbolzen 6A, 6B eine weitere an dem Halter 7 angelenkte Schiene 8A bzw. 8B zur Höhenverstellung. Das Feststellen und Lösen der Längen- und Höhenverstellung erfolgt mittels eines Bedienhebels 9, der in der Fig. 1 an seiner Anlenkung an den beiden Klemmbolzen 6A, 6B in einem Schnitt gezeigt ist, wobei er sich im Bereich der Anlenkung in zwei das Mantelrohr 2 und die Schienen 4A, 4B umgreifende Schenkel 9A, 9B aufgabelt.

Dieser Bedienhebel 9 ist mit seinen Schenkeln 9A, 9B jeweils auf einer Lauffläche einer Kurvenscheibe 10A bzw. 10B angeordnet, die wiederum jeweils mit einer weiteren Kurvenscheibe 11A bzw. 11B in Verbindung stehen. Wird nun der Bedienhebel 9 betätigt, so werden die Kurvenscheiben 10A und 11A bzw. 10B und 11B derart zueinander verstellt, daß entweder ein Spiel zwischen den Kurvenscheiben freigegeben wird, oder aber die Kurvenscheiben 10A und 11A bzw. 10B und 11B zueinander kein Spiel aufweisen und daher die Positionseinstellvorrichtung 1 festgestellt ist.

Befinden sich die Kurvenscheiben 10A und 11A bzw. 10BA und 11B in ihrer ein Spiel freigebenden Stellung, kann die Höhen- und/oder Längenverstellung der Lenksäule erfolgen.

Wie der Fig. 1 weiter entnommen werden kann, erfolgt ein I-neingriffbringen und Lösen der Verklemmung für die Höhenverstellung und Längenverstellung im wesentlichen formschlüssig, nämlich beispielsweise durch eine Verzahnung.

Befinden sich die Kurvenscheiben 10A, 11A bzw. 10B, 11B zueinander in ihrer mit Spiel behafteten Stellung, so werden die miteinander in Eingriff stehenden Zähne der Höhenverstellung dadurch schnell voneinander gelöst, daß ferner auf jeder Seite eine Feder 12A bzw. 12B vorgesehen ist, die dem Eingriff der Zähne zueinander entgegenwirkt und daher, sobald die Kurvenscheiben 10A, 11A bzw. 10B, 11B ein Spiel aufweisen, die Zähne außer Eingriff bringt.

Eine entsprechende Feder 13A, 13B kann auch für die gemäß der gezeigten Ausführungsform formschlüssige Verbindung zur Längenverstellung vorgesehen sein, um dadurch ein leichteres Verstellen der Lenksäule auch in der Länge zu ermöglichen.

Findet nun eine Verstellung der Höhe oder der Länge der Lenksäule statt, so werden die Klemmbolzen 6A, 6B durch den Bedienhebel 9 geführt. Der Bedienhebel 9 bewegt sich bei der gezeigten erfindungsgemäßen Positioniereinrichtung 1 mit der Höhenverstellbewegung, aber nicht mit der Längenverstellung der Lenksäule mit.

Um zu gewährleisten, daß die beim Verstellen der Höhe und/oder der Länge eingeleiteten Bedienkräfte nicht zu einem Verkippen der Klemmbolzen 6A, 6B oder der hintereinander auf den Klemmbolzen 6A und 6B angeordneten Einzelteile gegeneinander oder einem Erschwernis des Ineinandergreifens der Zahnsegmente führen, ist jeweils eine Hülse 14A bzw. 14B auf den Klemmbolzen 6A und 6B vorgesehen, wobei die Hülsen 14A und 14B jeweils fest mit einer großen Scheibe 15A und 15B verbunden sind. Diese Scheibe 15A und 15B ist auf jeder Seite zwischen dem Halter 7 und der jeweiligen Schiene 4A, 4B zur Längsverstellung angeordnet.

Findet nun eine Höhenverstellbewegung statt, kann die Scheibe 15A bzw. 15B mit dem Klemmbolzen 6A, 6B zusammen am Halter 7 entlang gleiten, aber nicht kippen. Dadurch kann auch der Bedienhebel 9 sauber geführt werden und Funktionsstörungen beim Verstellen der Lenksäule vermieden werden.

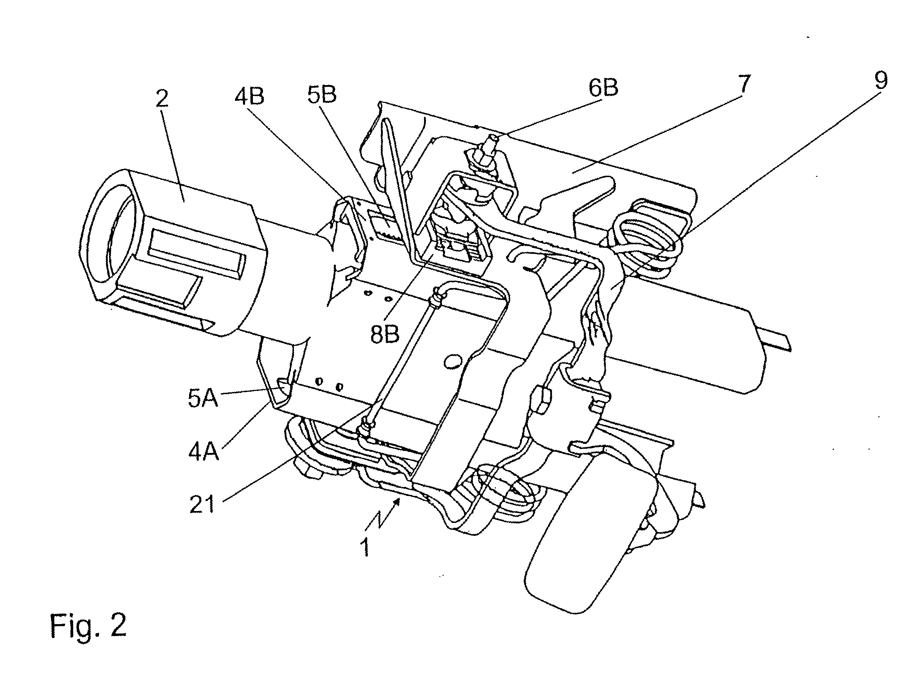

Eine weitere bevorzugte Ausführungsform der Erfindung ist in der Fig. 2 dargestellt, wobei hier eine Positionseinstellvorrichtung 1 auf einem Mantelrohr 2 in einer perspektivischen Ansicht gezeigt ist. Aus Gründen der Übersichtlichkeit sind funktionsgleiche Bauteile mit den gleichen Bezugszeichen wie in Fig. 1 bezeichnet.

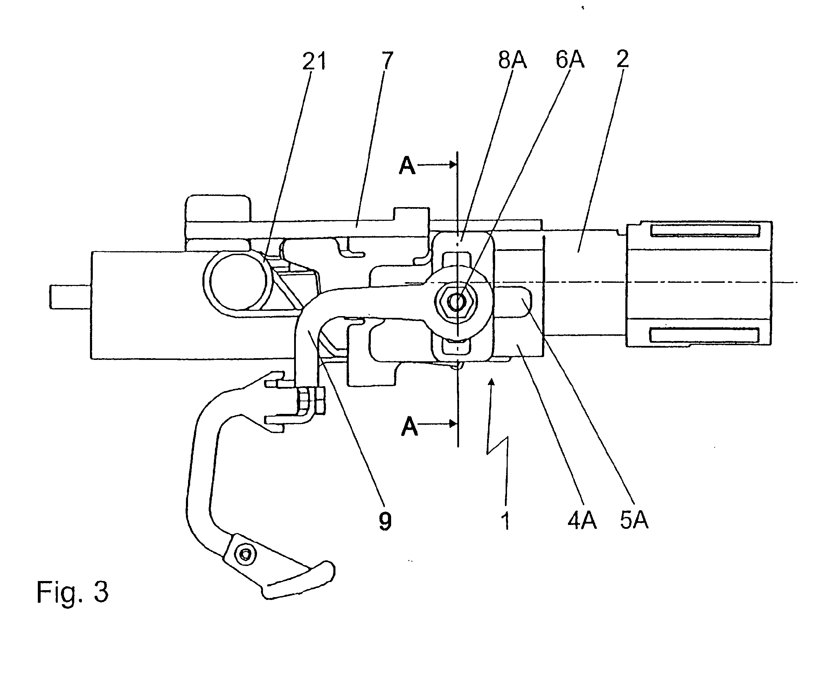

Die Fig. 3 bis 5 zeigen ebenfalls die Positionseinstellvorrichtung 1 gemäß der in Fig. 2 dargestellten Ausführungsform, jedoch jeweils in einer anderen Darstellung.

Bei der Ausführungsform gemäß den Fig. 2 bis 5 handelt es sich im Gegensatz zu der Ausführung nach Fig. 1 nicht um eine symmetrisch ausgebildete Positioniereinrichtung, sondern um eine asymmetrische. Die Asymmetrie wird dabei insbesondere dadurch erreicht, daß zur Arretierung der Längen- und/oder Höhenverstellung unter anderem die hierzu vorgesehenen Schienen 4A, 4B, 8A, 8B durch den zugeordneten Klemmbolzen 6A bzw. 6B auf der einen Seite des Mantelrohrs 2 formschlüssig durch korrespondierende Zahnprofile verklemmt werden und auf der anderen Bolzenseite das Feststellen der Längen- und Höhenverstellung durch eine reibschlüssige Klemmung erfolgt.

Eine solche Ausführung hat den Vorteil, daß der Hub im Vergleich zu einer Ausführung mit zwei formschlüssigen Klemmungen, wie sie in der Fig. 1 dargestellt ist, erheblich verringert wird, wodurch noch mehr Bauraum eingespart werden kann. Dennoch wird durch die einseitige formschlüssige Klemmung eine sichere Verklemmung bereitgestellt. Zudem hat die Kombination von Formschlußklemmung und Reibschlußklemmung den Vorteil, daß die Formschlußklemmung auf einer Seite mit geringer Vorspannung eine relativ hohe Crash-Festigkeit gewährleistet, während die Reibschlußklemmung auf der anderen Seite eine hohe Spielfreiheit und Schwingungsfreiheit aufweist, was zu einem relativ ruhig geführten Lenkrohr und damit letztendlich Lenkrad führt.

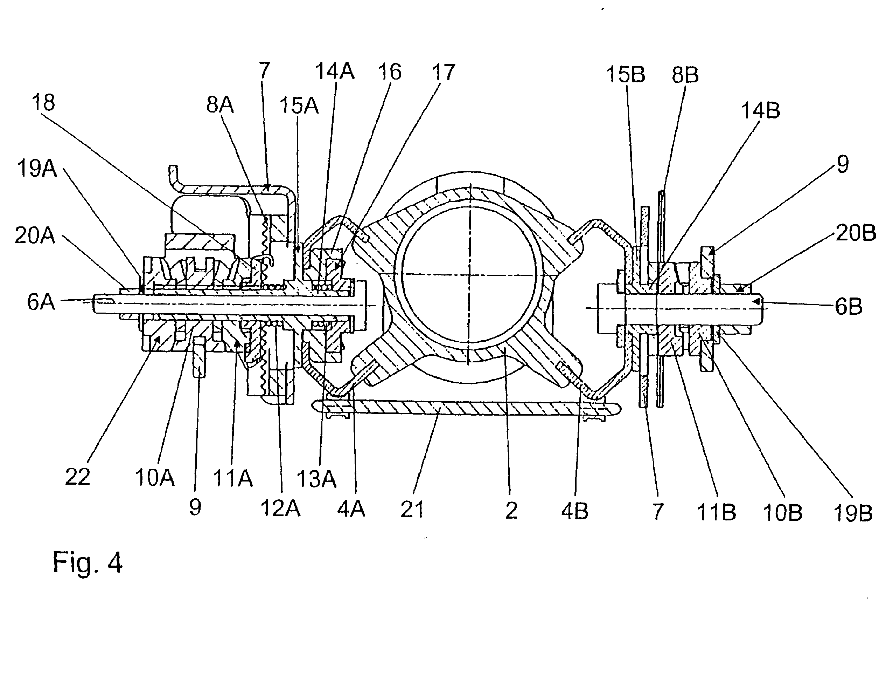

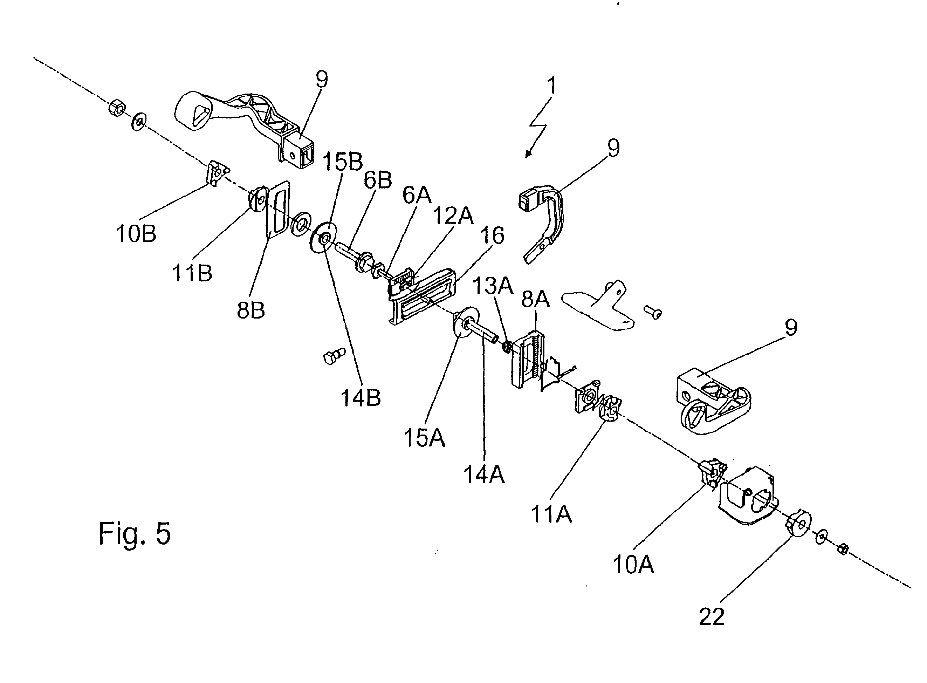

In Fig. 4 kann nun die Anordnung der einzelnen Bauteile der Positioniervorrichtung insbesondere auf den Klemmbolzen 6A, 6B ersehen werden. Betrachtet man nun die formschlüssige Klemmung des Mantelrohrs 2 einerseits in vom Mantelrohr 2 wegführender Richtung, so erkennt man, daß der Klemmbolzen 6A durch den Schlitz 5A der Schiene 4A geführt ist, wobei die Schiene 4A ihrerseits mit einer Gleitschiene 16 versehen ist, die auf ihrer dem Mantelrohr 2 zugewandten Seite mit Zahnsegmenten versehen ist, wie insbesondere auch der Fig. 5 zu entnehmen ist. Auf dem Klemmbolzen 6A ist dabei ein Gleitstein 17 vorgesehen, der ebenfalls mit Zahnsegmenten versehen ist, die mit den Zahnsegmenten der Gleitschiene 16 zum Zwecke der Längenverstellung des Mantelrohres 2 in Eingriff kommen.

Auf den Klemmbolzen 6A ist dabei eine Hülse 14A aufgeschoben, die im Bereich zwischen der Schiene 4A und dem Träger 7 eine sich radial erstreckende Scheibe 15A aufweist.

Am Träger 7A ist in vom Mantelrohr 2 wegführender Richtung eine Gleitschiene 8A zur Höhenverstellung vorgesehen, die an ihrer dem Mantelrohr 2 abgewandten Seite mit Zahnsegmenten versehen ist. Dieser Gleitschiene 8A gegenüberliegend ist ein sich auf dem Klemmbolzen 6A befindlicher Gleitstein 18 angeordnet, der auf der der Gleitschiene 8A zugewandten Seite mit Zahnsegmenten versehen ist, um mit der Gleitschiene 8A selbst in Eingriff zu kommen.

In vom Mantelrohr 2 wegführender Richtung sind nun drei Kurvenscheiben 11A, 10A und 22 angeordnet, wobei die mittlere Kurvenscheibe 10A mit dem Bügel 9 in Eingriff steht, der beim Bedienen eine Drehung der Kurvenscheibe 10A bewirkt. Abgeschlossen wird die Anordnung auf dem Klemmbolzen 6A mit einer Scheibe 19 und einer Sechskantmutter 20A.

Die Kurvenscheiben 10A, 11A, 22 sind derart angeordnet, daß in Schließstellung bzw. Klemmstellung des Bedienhebels 9 kein Spiel zwischen den Kurvenscheiben 10A, 11A und 22 vorhanden ist, während in einer Verstellstellung des Bedienhebels 9 ein Spiel gegeben ist. In einer solchen Verstellstellung wirken die Federn 12A, 13A derart, daß die Gleitschiene 16 und die Schiene 4A von ihren Gleitsteinen 17 bzw. 18 derart auseinander bewegt werden, daß deren Zahnsegmente nicht mehr miteinander in Eingriff stehen.

Auf der anderen Seite des Mantelrohrs 2, an der ein reibschlüssiger Klemmmechanismus vorgesehen ist, der eine schmale Bauart der Positionseinstellvorrichtung 1 erlaubt, ist der Klemmbolzen 6B durch die Schiene 4B durchgeführt und durchläuft dann den Halter 7, der ebenfalls nicht symmetrisch ausgebildet ist, sondern auf der mit einer reibschlüssigen Klemmung versehenen Seite zumindest im vorderen Bereich des Mantelrohres 2 sehr schmal ausgebildet ist und sich erst nach hinten verbreitert.

Wiederum ist auf dem Klemmbolzen 6B eine Hülse 14B angeordnet, die mit einer Scheibe 15B versehen ist, die sich im Bereich zwischen der Schiene 4B und dem Halter 7 erstreckt. Nach der Hülse 14B folgt in vom Mantelrohr 2 wegführender Richtung die Kurvenscheibe 11B, welche verdrehsicher die sie radial überragende Schiene 8B zur Höhenverstellung trägt. Daran schließt sich die vom Mantelrohr 2 aus gesehen äußere Kurvenscheibe 11B an, welche mit dem Bedienhebel 9 in Verbindung steht. Danach sind entsprechend der anderen Seite ferner eine Scheibe 19B und eine Sechskantmutter 20B auf dem Klemmbolzen 6B vorgesehen.

Um die Positionseinstellvorrichtung 1 ohne Aufbringen einer Kraft in ihrer geschlossenen Position zu halten, was insbesondere aus Sicherheitsaspekten sehr erwünscht ist, ist gemäß der in den Fig. 2 bis 5 gezeigten Ausführungsform ferner eine Feder 21 vorgesehen, die eine Klemmstellung bzw. Arretier-Position des Bedienhebels 9 in der die Positionseinstellvorrichtung 1 festgestellt ist, unterstützt.

Selbstverständlich kann die Anzahl und Abfolge der Kurvenscheiben in anderen Ausführungen abweichend von den gezeigten Ausführungsbeispielen sein. Jedoch wird der Fachmann die Kurvenscheiben, egal wieviele vorgesehen sind, immer derart anordnen, daß beidseitig durch den Bedienhebel 9 immer gleichzeitig ein offener bzw. verklemmter Zustand zumindest für die Verstellung in einer Richtung erreicht werden kann, damit eine Höhen- und/oder Längenverstellung möglich wird.

## Patentansprüche

1. Positionseinstellvorrichtung für eine Lenksäule, insbesondere eines Kraftfahrzeuges, mit einem an zwei im wesentlichen einander gegenüberliegend angeordneten Schienen fixierten Mantelrohr, wobei sich die Schienen in axialer Richtung des Mantelrohres erstrecken und zu einer Längenverstellung der Lenksäule sich in axialer Richtung erstreckende Schlitze aufweisen, ferner jeweils durch die Schlitze der Schienen geführte Klemmbolzen bereitgestellt sind, die sich im wesentlichen in einer radialer Richtung weg vom Mantelrohr erstrecken, wobei zumindest ein Klemmbolzen eine Schiene zur Höhenverstellung durchläuft, wobei ein Feststellen und Lösen der Längen- und Höhenverstellung mittels eines Bedienhebels erfolgt,
**dadurch gekennzeichnet,**
**daß** das Feststellen und Lösen der Längen- und Höhenverstellung über eine mittels des Bedienhebels (9) betätigbare Kurvenscheibe (10A, 10B, 11A, 11B, 22) erfolgt.

2. Positionseinstellvorrichtung nach Anspruch 1,
**dadurch gekennzeichnet,**
**daß** die Längen- und Höhenverstellung jeweils gesondert mittels einer jeweiligen Kurvenscheibe (11A, 22) vorgesehen ist und der Bedienhebel (9) eine mittig zu diesen Kurvenscheiben (11A, 22) und mit diesen zusammenwirkenden weitere gelagerte Kurvenscheibe (10A) betätigt.

3. Positionseinstellvorrichtung nach Anspruch 1 oder 2,
**dadurch gekennzeichnet,**
**daß** zwischen zumindest einer der Schienen (4A, 4B) und einem dazu benachbarten fahrzeugfesten Halter (7) auf dem Klemmbolzen (6A, 6B) eine mit einer Scheibe (15A, 15B) fest verbundene Hülse (14A, 14B) angeordnet ist.

4. Positionseinstellvorrichtung nach einem der Ansprüche 1 bis 3,
**dadurch gekennzeichnet,**
**daß** zur Arretierung der Längen- und/oder Höhenverstellung wenigstens die hierzu vorgesehenen Schienen (4A, 4B, 8A, 8B) auf zumindest einer Seite des Mantelrohrs (2) mittels des wenigstens einen zugeordneten Klemmbolzens (6A, 6B) formschlüssig verklemmbar sind.

5. Positionseinstellvorrichtung nach Anspruch 4,
**dadurch gekennzeichnet,**
**daß** die formschlüssige Klemmung zumindest teilweise durch korrespondierende Zahnprofile gebildet wird.

6. Positionseinstellvorrichtung nach einem der Ansprüche 1 bis 3,
**dadurch gekennzeichnet,**
**daß** zur Arretierung der Längen- und/oder Höhenverstellung wenigstens die hierzu vorgesehenen Schienen (4A, 4B, 8A, 8B) auf zumindest einer Seite des Mantelrohrs (2) mittels des wenigstens einen zugeordneten Klemmbolzens (6A, 6B) reibschlüssig verklemmbar sind.

7. Positionseinstellvorrichtung nach einem der Ansprüche 4 bis 6,
**dadurch gekennzeichnet,**
**daß** auf einer der Seiten des Mantelrohrs (2) eine formschlüssige Klemmung und auf der anderen Seite des Mantelrohrs (2) eine reibschlüssige Klemmung vorgesehen ist.

## Claims

1. Position adjustment device for a steering column, in particular for a motor vehicle, with a casing tube fixed on two rails arranged essentially opposite one another, the said rails extending in the axial direction of the casing tube and having slots that extend in the axial direction for adjusting the length of the steering column, and with respective clamping bolts passing through the said slots in the said rails and extending essentially in a radial direction away from the casing tube, such that at least one clamping bolt passes through a rail for height adjustment, the length and height adjustments being locked and released by means of an operating lever, **characterised in that** the length and height adjustments are locked and released by a cam disc (10A, 10B, 11A, 11B, 22) that can be actuated by means of the operating lever (9).

2. Position adjustment device according to Claim 1, **characterised in that** the length and height adjustment are effected separately by means of a respective cam disc (11A, 22) and the operating lever (9) actuates a further cam disc (10A) mounted in the middle between these cam discs (11A, 22), which co-operates with the latter.

3. Position adjustment device according to Claims 1 or 2, **characterised in that** a sleeve (14A, 14B) in fixed connection with a disc (15A, 15B) is arranged on the clamping bolts (6A, 6B) between at least one of the rails (4A, 4B) and an adjacent holder (7) fixed on the vehicle.

4. Position adjustment device according to any of Claims 1 to 3, **characterised in that** to lock the length and/or height adjustment, at least the rails (4A, 4B, 8A, 8B) provided for the purpose can be clamped with positive locking on at least one side of the casing tube (2) by means or the at least one associated clamping bolt (6A, 6B).

5. Position adjustment device according to Claim 4, **characterised in that** the positive-lock clamping is effected at least in part by corresponding toothed profiles.

6. Position adjustment device according to any of Claims 1 to 3, **characterised in that** to lock the length and/or height adjustment, at least the rails (4A, 4B, 8A, 8B) provided for the purpose can be clamped with positive locking on at least one side of the casing tube (2) by means or the at least one associated clamping bolt (6A, 6B).

7. Position adjustment device according to any of Claims 4 to 6, **characterised in that** clamping with positive locking is provided on one side of the casing tube (2) and clamping by friction is provided on the other side of the casing tube (2).

## Revendications

1. Dispositif d'ajustement de position pour une colonne de direction, en particulier d'un véhicule automobile, avec un tube enveloppe fixé à deux glissières disposées sensiblement à l'opposé l'une de l'autre, les glissières s'étendant dans la direction axiale du tube enveloppe et présentant des fentes s'étendant en direction axiale, pour permettre une manoeuvre de réglage en longueur de la colonne de direction, en outre, chaque fois des boulons de serrage guidés à travers les fentes des glissières étant fournis, s'étendant sensiblement en une direction radiale en s'écartant du tube enveloppe, au moins un boulon de serrage traversant une glissière, pour effectuer la manoeuvre de réglage en hauteur, un blocage et un desserrement du réglage en longueur et en hauteur se faisant au moyen d'un levier de manoeuvre, **caractérisé en ce que** le blocage et le desserrement du réglage en longueur et en hauteur s'effectuent par l'intermédiaire d'un disque de came (10A, 10B, 11A, 11B, 22) susceptible d'être actionné au moyen du levier de manoeuvre (9).

2. Dispositif d'ajustement de position selon la revendication 1, **caractérisé en ce que** le réglage en longueur et en hauteur est prévu chaque fois séparément au moyen d'un disque de came (11A, 22) respectif, et le levier de manoeuvre (9) actionnant un autre disque de came (10A), monté à rotation centralement par rapport à ces disques de came (11A, 22) et coopérant avec ceux-ci.

3. Dispositif d'ajustement de position selon la revendication 1 ou 2, **caractérisé en ce qu'**entre au moins l'une des glissières (4A, 4B) et un support (7) fixé au véhicule, voisin de celles-ci, sur le boulon de serrage (6A, 6B) est disposée une douille (14A, 14B) reliée rigidement à un disque (15A, 15B).

4. Dispositif d'ajustement de position selon l'une des revendications 1 à 3, **caractérisé en ce que** pour fixer le réglage en longueur et/ou en hauteur, au moins les glissières (4A, 4B, 8A, 8B) prévues à cette fin sont susceptibles d'être serrées, avec une liaison à ajustement de forme, sur au moins un côté du tube enveloppe (2), au moyen du au moins un boulon de serrage (6A, 6B) associé.

5. Dispositif d'ajustement de position selon la revendication 4, **caractérisé en ce que** le serrage avec liaison à ajustement de forme est formé au moins partiellement par des profils dentés correspondants.

6. Dispositif d'ajustement de position selon l'une des revendications 1 à 3, **caractérisé en ce que**, pour fixer le réglage en longueur et/ou en hauteur, au moins les glissières (4A, 4B, 8A, 8B) prévues à cette fin sont susceptibles d'être serrées, avec une liaison par friction, sur au moins un côté du tube enveloppe (2), au moyen du au moins un boulon de serrage (6A, 6B) associé.

7. Dispositif d'ajustement de position selon l'une des revendications 4 à 6, **caractérisé en ce que**, sur l'un des côtés du tube enveloppe (2), est prévu un serrage avec liaison par ajustement de forme et, sur l'autre côté du tube enveloppe (2), est prévu un serrage avec liaison par friction.
